# EUROPÄISCHE PATENTANMELDUNG

(11) **EP 1 049 091 A2**
(43) Veröffentlichungstag der Anmeldung: **02.11.2000**
(21) Anmeldenummer: 00106358.5
(22) Anmeldetag: 24.03.2000
(51) Int. Cl.: G11B 23/023, G11B 23/03, G11B 23/033, G11B 33/04, G11B 23/00

(54) **Aufnahme für eine CD-Hülle**

(30) Priorität: 29.04.1999 DE 19919468
(71) Anmelder: Beutler, Dirk, 36100 Petersberg (DE)
(72) Erfinder: Beutler, Dirk, 36100 Petersberg (DE)
(74) Vertreter: Schlagwein, Udo, Dipl.-Ing.

(57) **Zusammenfassung**

Eine Aufnahme (1) für eine CD-Hülle hat ausschließlich im Randbereich eines Rahmens (2) eine Auflage (3), auf der eine CD-Hülle zu ruhen vermag. Die Aufnahme (1) hat weiterhin einen gegenüber der Auflage (3) zurückspringenden Boden (5) mit einem mittigen Haltezapfen (6) zum Eingreifen in die mittige Öffnung einer einzelnen, auf dem Boden (5) gehaltenen Compactdisk.

## Beschreibung

Die Erfindung betrifft eine Aufnahme für eine CD-Hülle, welche eine Auflage für die CD-Hülle und zumindest einen an einer Seite geringfügig über die eingelegte CD-Hülle greifenden Haltesteg und zumindest eine Federzunge hat, welche die eingelegte CD-Hülle zu einer Schmalseite hin vorspannt.

Eine Aufnahme der vorstehenden Art ist Gegenstand der DE 94 05 776.1 U1. Die in dieser Schrift beschriebene Aufnahme ist so gestaltet, dass man in jede Aufnahme eine CD-Hülle einsetzen kann. An den vier Rändern der Aufnahme sind Kupplungen mit Schwalbenschwanzführungen vorgesehen, die es ermöglichen, die einzelnen Aufnahmen miteinander zu verbinden, so dass eine Tafel aus beispielsweise neun einzelnen Aufnahmen entsteht, die jedoch wegen der vorgesehenen Ausbildung der Kupplungen räumlich in einer Ebene liegen müssen.

Oftmals werden Compactdisks in sehr einfacher Kartonverpackung verbreitet, beispielsweise als Beigabe in Zeitschriften. Wenn man Compactdisks häufig benutzt, dann empfindet man es vielfach als lästig, sie jeweils einer aus Kunststoff gestalteten CD-Hülle entnehmen zu müssen, weil hierzu der Deckel der Hülle geöffnet und dann die Compactdisk vom Haltezapfen abgehoben werden muss. Deshalb besteht ein Bedürfnis nach Aufnahmen, in welche nicht nur CD-Hüllen, sondern auch einzelne Compactdisks untergebracht werden können.

Der Erfindung liegt das Problem zugrunde, eine Aufnahme der eingangs genannten Art so zu gestalten, dass wahlweise oder sogar gemeinsam eine CD-Hülle oder eine einzelne Compactdisk untergebracht werden kann.

Dieses Problem wird erfindungsgemäß dadurch gelöst, dass die Auflage nur im Randbereich der Aufnahme vorgesehen ist und die Aufnahme einen gegenüber der Auflage zurückspringenden Boden mit einem mittigen Haltezapfen zum Eingreifen in die mittige Öffnung einer einzelnen, auf dem Boden gehaltenen Compactdisk aufweist.

Durch diese Gestaltung der Aufnahme kann man in ihr zunächst eine Compactdisk und auf Wunsch darüber eine CD-Hülle einsetzen. Dadurch ist die Aufnahme besonders vielseitig zu verwenden. Die erfindungsgemäße Aufnahme kann beispielsweise an einer Wand befestigt werden, so dass dann eine eingesetzte Compactdisk oder CD-Hülle stets vollflächig zu sehen ist. Deshalb eignet sich die Aufnahme besonders zur Präsentation von Compactdisks bzw. CD-Hüllen in Geschäften.

Übliche CD-Hüllen aus Kunststoff haben an der ihrem Scharnier gegenüberliegenden Seite eine Vertiefung. Diese kann zur Fixierung der CD-Hülle in der erfindungsgemäßen Aufnahme genutzt werden, wenn gemäß einer vorteilhaften Weiterbildung der Erfindung die Federzunge an der Seite des Haltesteges vorgesehen ist und die eingelegte Compactdisk zur gegenüberliegenden Seite hin vorspannt und wenn an der dem Haltesteg gegenüberliegenden Seite der Aufnahme ein über einen Vorsprung der CD-Hülle eingreifender Rastvorsprung vorgesehen ist.

Die CD-Hülle kann auch dann geöffnet werden, wenn sie in die Aufnahme eingesetzt ist, wenn gemäß einer anderen Weiterbildung der Erfindung die Aufnahme an ihren beiden Endbereichen der den Haltesteg aufweisenden Seite jeweils eine Ausnehmung zur Aufnahme von Endbereichen der Seitenteile einer geöffneten CD-Hülle aufweist. Diese Ausbildung ist besonders praktisch zu handhaben, weil man zur Entnahme einer Compactdisk die CD-Hülle nicht aus der Aufnahme herausnehmen muss.

Die Entnahme einer einzelnen, in der Aufnahme gehaltenen Compactdisk ist besonders bequem, wenn der Haltezapfen in die Ebene des Bodens hinein zur Rückseite der Aufnahme hin schwenkbar ausgebildet ist. Durch diese Ausbildung wird die Compactdisk dadurch freigegeben, dass man auf den Haltezapfen drückt und aus der Öffnung die Compactdisk hinausdrückt.

Die Compactdisk wird zum besonders bequemen Greifen vom Boden der Aufnahme weg in Entnahmerichtung bewegt, wenn gemäß einer anderen Weiterbildung der Erfindung der Haltezapfen mit einem beim Hineinschwenken des Haltezapfens in den Boden aus dem Boden heraus schwenkenden Winkelheber verbunden ist.

Zur weiteren Erleichterung des Herausnehmens einer einzelnen Compactdisk aus der Aufnahme ist vorgesehen, dass der Boden vier Griffmulden zum Untergreifen einer eingelegten Compactdisk aufweist.

Entsprechend kann man das Herausnehmen einer CD-Hülle aus der Aufnahme erleichtern, indem in einem eine eingelegte CD-Hülle umfassenden Rahmen an der dem Haltesteg gegenüberliegenden Seite zum Herausnehmen oder Öffnen einer eingelegten CD-Hülle zwei Griffmulden vorgesehen sind.

Die Aufnahme wird zu einem Modul und kann mit anderen Aufnahmen zu einer Einheit verbunden werden, wenn an Randbereichen der Aufnahme Kupplungen zum Verbinden mit jeweils einer weiteren Aufnahme vorgesehen sind. Dieses Merkmal ist ganz besonders vorteilhaft und kann auch dann Anwendung finden, wenn die Aufnahme nicht zur wahlweisen oder gleichzeitigen Aufnahme einer CD-Hülle oder einer einzelnen Compactdisk ausgebildet ist.

Die Aufnahmen können in beliebigen Winkelausrichtungen miteinander verbunden werden, wenn gemäß einer anderen Weiterbildung der Erfindung die Kupplungen durch jeweils eine Ausnehmung in jeweils einer Seite der Aufnahme und einen die Ausnehmung überbrückenden Stift und durch eine Klammer gebildet sind, welche zwei maulartige Öffnungen hat, die zum Übergreifen zweier gegenüberliegender Zapfen zweier aneinanderliegender Aufnahmen beim Einsetzen in die dann aneinander angrenzenden Öffnungen bemessen ist.

Wenn in der Aufnahme CD-Hüllen aus Pappe oder Maxi-CD's magaziniert werden sollen, dann lassen sich diese CD-Hüllen nicht durch den Rastvorsprung und die Federzungen fixieren. Für solche Fälle kann man vorsehen, dass im Boden im Bereich einer Ecke einer eingelegten CD-Hülle zwei jeweils an einer Seite der Ecke angeordnete Haltelaschen zum Halten eines über die Ecke zu führenden Gummibandes vorgesehen sind.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig.1: eine perspektivische Ansicht einer Aufnahme nach der Erfindung,
- Fig.2: einen horizontalen Schnitt durch die Aufnahme nach Figur 1,
- Fig.3: eine im Maßstab gegenüber Figur 1 vergrößerte Ansicht eines Teilbereiches der Aufnahme mit einem Haltezapfen für eine einzelne Compactdisk,
- Fig.4: einen Schnitt durch die Anordnung nach Fig. 3,
- Fig.5: eine Klammer zum Verbinden zweier Aufnahmen,
- Fig.6: eine Anordnung von fünf miteinander verbundenen, erfindungsgemäßen Aufnahmen,
- Fig.7: eine Anordnung von sechs zu einem Sechseck miteinander verbundenen Aufnahmen.

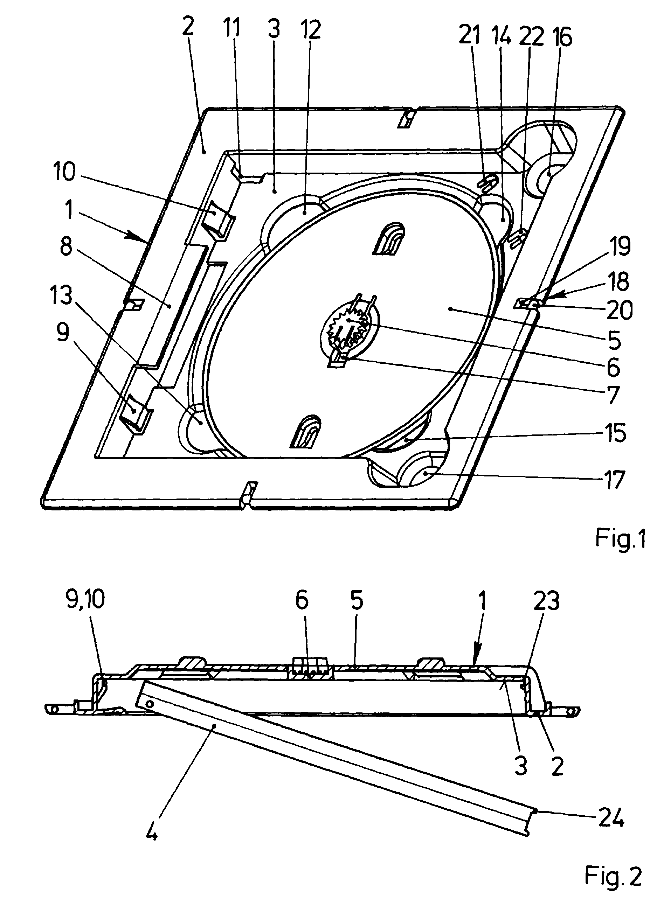

Die Figur 1 zeigt eine einzelne Aufnahme 1, welche eine von einem Rahmen 2 eingefasste Auflage 3 hat, auf die eine in Figur 2 gezeigte CD-Hülle 4 auf zuliegen vermag. Diese Auflage 3 ist nur nahe des Rahmens 2 vorgesehen. Im mittleren Bereich hat die Aufnahme 1 einen zurückspringenden, kreisförmigen Boden 5, der eine nicht gezeigte Compactdisk aufzunehmen vermag. Zur Halterung dieser Compactdisk auf dem Boden 5 dient ein Haltezapfen 6, der sternförmig ausgebildet ist und in die übliche zentrale Öffnung der Compactdisk zu greifen vermag. Zum Freigeben einer Compactdisk drückt man auf diesen Haltezapfen 6, wodurch sich dieser in die Ebene des Bodens 5 hineinbewegt. Wenn die Aufnahme 1 an einer Wand befestigt ist, gelangt bei dieser Bewegung ein Winkelhebel 7 gegen diese Wand und schwenkt dann in die Ebene des Bodens 5 hinein, wodurch das Freikommen der Compactdisk vom Boden 5 gefördert wird.

Zum Halten der CD-Hülle 4 hat die Aufnahme 1 in Figur 1 gesehen an der linken Seite ihres Rahmens 2 einen Haltesteg 8, der teilweise über die CD-Hülle 4 zu greifen vermag. Weiterhin sind an der Seite des Haltesteges 8 zwei Federzungen 9, 10 vorgesehen, welche eine eingelegte CD-Hülle in Figur 1 gesehen nach rechts vorspannen. Um eine in die Aufnahme 1 eingelegte CD-Hülle 4 öffnen zu können, ist an beiden Enden der Seite des Rahmens 2 mit dem Haltesteg 8 jeweils eine Ausnehmung 11 vorgesehen

Die Figur 1 lässt weiterhin erkennen, dass im Boden 5 vier Griffmulden 12, 13, 14, 15 eingeformt sind, die ein Untergreifen einer eingesetzten Compactdisk ermöglichen. Weiterhin sind im Rahmen 2 insgesamt zwei entsprechende Griffmulden 16, 17 vorgesehen, die ein Untergreifen einer eingesetzten CD-Hülle 4 erlauben, um diese zu öffnen oder zu entnehmen.

Ein weiteres, wichtiges Merkmal der Aufnahme 1 liegt darin, dass sie an ihren vier Seiten jeweils eine Kupplung 18 zum Verbinden mit einer weiteren Aufnahme 1 hat. Diese Kupplungen 18 sind durch in den Rahmen 2 hineinführende Ausnehmungen 19 gebildet, die jeweils von einem Zapfen 20 überbrückt werden.

Will man in der Aufnahme 1 eine CD-Hülle aus Karton oder eine Maxi-CD befestigen, so ist das wegen der geringen Festigkeit des Kartons bzw. der Größe der Maxi-CD nicht durch Verrasten möglich. Ersatzweise spannt man einen nicht gezeigten Gummiring über eine Ecke einer solchen CD-Hülle. Dieser Gummiring kann an zwei Haltelaschen 21, 22 befestigt werden, die im Bereich einer Ecke des Rahmens 2 an der dem Haltesteg 8 gegenüberliegenden Seite vorgesehen sind.

Die Figur 2 lässt erkennen, dass der Rahmen 2 an der den Federzungen 9, 10 gegenüberliegenden Seite Rastvorsprünge 23 hat, welche über einen Vorsprung 24 der CD-Hülle 4 zu greifen vermögen, wenn diese in die Aufnahme 1 eingesetzt ist. Besonders verdeutlicht die Figur 2, wie eine CD-Hülle 4 in die Aufnahme 1 eingesetzt wird. Weiterhin ist zu sehen, dass der Boden 5 gegenüber der Auflage 3 zurückspringt, so dass unterhalb einer eingesetzten CD-Hülle 4 eine einzelne Compactdisk untergebracht werden kann.

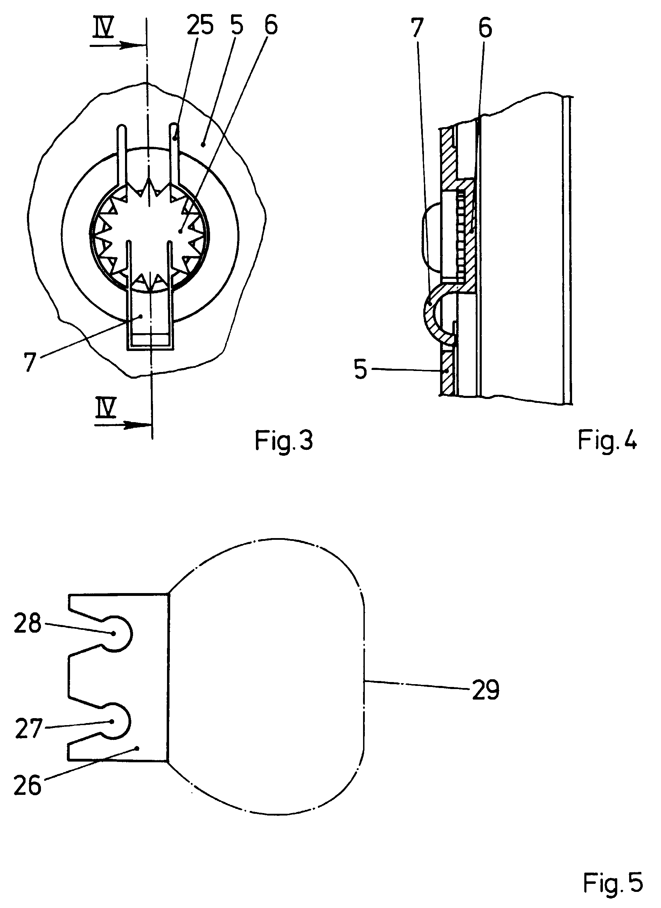

Wie die Figur 3 zeigt, ist der Haltezapfen 6 im Boden 5 aufgrund von Durchbrechungen 25 einseitig gehalten. Drückt man auf ihn, so kann er deshalb in die Ebene des Bodens 5 hineinschwenken. Der Winkelhebel 7 ist an diesem Haltezapfen 6 befestigt und nimmt deshalb zunächst an dieser Schwenkbewegung teil. Gelangt er gegen einen rückwärtigen Anschlag, beispielsweise die Wand, an welcher die Aufnahme 1 befestigt ist, dann schwenkt der Winkelhebel 7 aus der Ebene des Bodens 5 heraus und drückt eine eingesetzte Compactdisk vom Boden 5 weg, was vor allem die Figur 4 deutlich macht.

Die Figur 5 zeigt eine Klammer 26 mit zwei maulartigen Öffnungen 27, 28. Diese sind so bemessen, dass sich die Klammer 26 über zwei Zapfen 20 schieben lässt, wenn man zwei Aufnahmen 1 nebeneinander legt und die Ausnehmungen 19 miteinander fluchten. Die Klammern 26 können - wie in durchgezogenen Linien dargestellt - klein ausgebildet sein oder ein Griffteil 29 aufweisen, welches strichpunktiert gezeichnet wurde und ein Befestigen und Lösen der Klammer 26 von Hand ohne Werkzeug erlaubt.

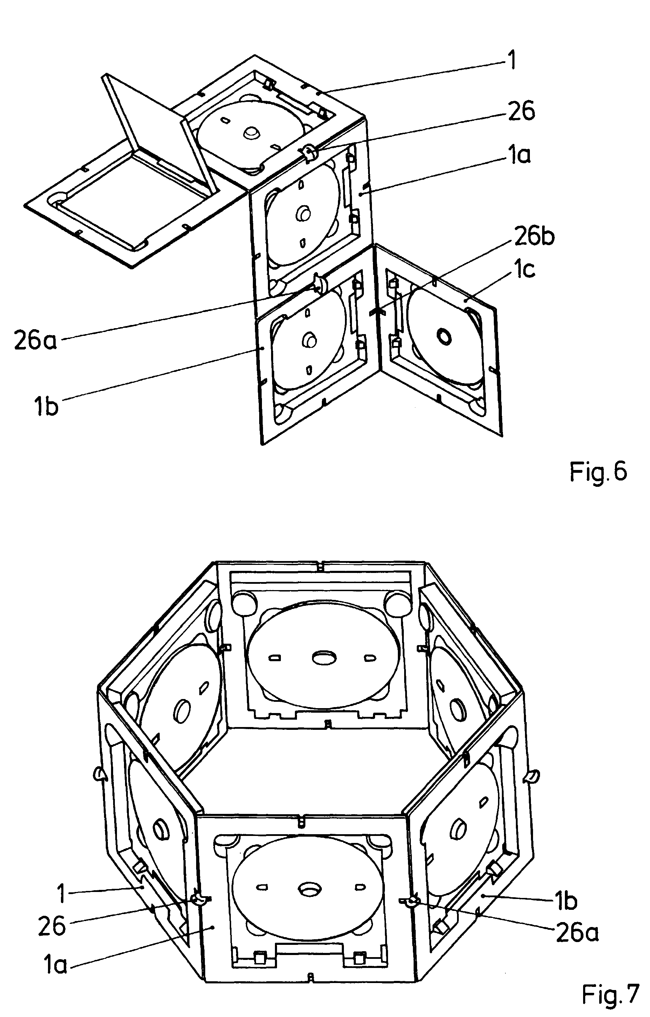

Die Figuren 6 und 7 verdeutlichen, dass mittels der Klammern 26, 26a, 26b ... mehrere Aufnahmen 1, 1a, 1b, 1c ... miteinander zu einer Einheit verbunden werden können.

### Bezugszeichenliste

- 1: Aufnahme
- 2: Rahmen
- 3: Auflage
- 4: CD-Hülle
- 5: Boden
- 6: Haltezapfen
- 7: Winkelhebel
- 8: Haltesteg
- 9: Federzunge
- 10: Federzunge
- 11: Ausnehmung
- 12: Griffmulde
- 13: Griffmulde
- 14: Griffmulde
- 15: Griffmulde
- 16: Griffmulde
- 17: Griffmulde
- 18: Kupplung
- 19: Ausnehmung
- 20: Zapfen
- 21: Haltelasche
- 22: Haltelasche
- 23: Rastvorsprung
- 24: Vorsprung
- 25: Durchbrechung
- 26: Klammer
- 27: Öffnung
- 28: Öffnung
- 29: Griffteil

## Patentansprüche

1. Aufnahme für eine CD-Hülle, welche eine Auflage für die CD-Hülle und zumindest einen an einer Seite geringfügig über die eingelegte CD-Hülle greifenden Haltesteg und zumindest eine Federzunge hat, welche die eingelegte CD-Hülle zu einer Schmalseite hin vorspannt, **dadurch gekennzeichnet,** dass die Auflage (3) nur im Randbereich der Aufnahme (1) vorgesehen ist und die Aufnahme (1) einen gegenüber der Auflage (3) zurückspringenden Boden (5) mit einem mittigen Haltezapfen (6) zum Eingreifen in die mittige Öffnung einer einzelnen, auf dem Boden (5) gehaltenen Compactdisk aufweist.

2. Aufnahme nach Anspruch 1, **dadurch gekennzeichnet,** dass die Federzunge (9, 10) an der Seite des Haltesteges (8) vorgesehen ist und die eingelegte CD-Hülle (4) zur gegenüberliegenden Seite hin vorspannt und dass an der dem Haltesteg (8) gegenüberliegenden Seite der Aufnahme (1) ein über einen Vorsprung (24) der CD-Hülle (4) eingreifender Rastvorsprung (23) vorgesehen ist.

3. Aufnahme nach Anspruch 2, **dadurch gekennzeichnet,** dass die Aufnahme (1) an ihren beiden Endbereichen der den Haltesteg (8) aufweisenden Seite jeweils eine Ausnehmung (11) zur Aufnahme von Endbereichen der Seitenteile einer geöffneten CD-Hülle (4) aufweist.

4. Aufnahme nach zumindest einem der vorangehenden Ansprüche, **dadurch gekennzeichnet,** dass der Haltezapfen (6) in die Ebene des Bodens (5) hinein zur Rückseite der Aufnahme (1) hin schwenkbar ausgebildet ist.

5. Aufnahme nach Anspruch 4, **dadurch gekennzeichnet,** dass der Haltezapfen (6) mit einem beim Hineinschwenken des Haltezapfens (6) in den Boden (5) aus dem Boden (5) heraus schwenkenden Winkelheber (7) verbunden ist.

6. Aufnahme nach zumindest einem der vorangehenden Ansprüche, **dadurch gekennzeichnet,** dass der Boden (5) vier Griffmulden (12, 13, 14, 15) zum Untergreifen einer ein-gelegten Compactdisk aufweist.

7. Aufnahme nach zumindest einem der vorangehenden Ansprüche, **dadurch gekennzeichnet,** dass in einem eine ein-gelegte CD-Hülle (4) umfassenden Rahmen (2) an der dem Haltesteg (8) gegenüberliegenden Seite zum Herausnehmen oder Öffnen einer eingelegten CD-Hülle (4) zwei Griffmulden (16, 17) vorgesehen sind.

8. Aufnahme nach zumindest einem der vorangehenden Ansprüche, **dadurch gekennzeichnet,** dass an Randbereichen der Aufnahme (1) Kupplungen (18) zum Verbinden mit jeweils einer weiteren Aufnahme (1) vorgesehen sind.

9. Aufnahme nach Anspruch 8, **dadurch gekennzeichnet,** dass die Kupplungen (18) durch jeweils eine Ausnehmung (19) in jeweils einer Seite der Aufnahme (1) und einen die Ausnehmung (19) überbrückenden Stift (20) und durch eine Klammer (26) gebildet sind, welche zwei maulartige Öff-nungen (27, 28) hat, die zum Übergreifen zweier gegenüberliegender Zapfen (20) zweier aneinanderliegender Aufnahmen (1) beim Einsetzen in die dann aneinander angrenzenden Ausnehmungen (19) bemessen ist.

10. Aufnahme nach zumindest einem der vorangehenden Ansprüche, **dadurch gekennzeichnet,** dass im Boden (5) im Bereich einer Ecke einer eingelegten CD-Hülle (4) zwei jeweils an einer Seite der Ecke angeordnete Haltelaschen (21, 22) zum Halten eines über die Ecke zu führenden Gummibandes vorgesehen sind.
